(19) Europäisches Patentamt

European Patent Office

Office européen des brevets

(11) **EP 1 496 079 B1**

(12) **EUROPÄISCHE PATENTSCHRIFT**

(45) Veröffentlichungstag und Bekanntmachung des Hinweises auf die Patenterteilung:
**06.07.2005 Patentblatt 2005/27**

(51) Int Cl.$^7$: **C08G 77/458**, C08G 18/61, C09D 183/10, C09J 183/10, C08L 83/10

(21) Anmeldenummer: **04015523.6**

(22) Anmeldetag: **01.07.2004**

(54) **Vernetzbare Siloxan-Harnstoff-Copolymere**

Crosslinkable polysiloxane-urea copolymers

Copolymères polysiloxane-urée durcissables

(84) Benannte Vertragsstaaten:
**BE DE FR GB NL PL**

(30) Priorität: **10.07.2003 DE 10331287**

(43) Veröffentlichungstag der Anmeldung:
**12.01.2005 Patentblatt 2005/02**

(73) Patentinhaber: **Wacker-Chemie GmbH**
**81737 München (DE)**

(72) Erfinder:
• **Selbertinger, Ernst, Dr.**
**01612 Nünchritz (DE)**

• **Ziche, Wolfgang, Dr.**
**01665 Diera (DE)**

(74) Vertreter: **Schuderer, Michael, Dr.**
**Wacker-Chemie GmbH**
**Zentralabteilung Patente**
**Marken und Lizenzen**
**Hanns-Seidel-Platz 4**
**81737 München (DE)**

(56) Entgegenhaltungen:
**WO-A-96/34030 WO-A-02/077072**
**WO-A-03/018704 US-B1- 6 750 309**

**Beschreibung**

Die Erfindung betrifft durch Feuchtigkeit vernetzbare Organopolysiloxan-Polyharnstoff-Blockcopolymere, ein Verfahren zur Herstellung der vernetzbaren Organopolysiloxan-Polyharnstoff-Blockcopolymeren sowie deren Verwendung, vernetzbare Zusammensetzungen enthaltend die vernetzbaren Organopolysiloxan-Polyharnstoff-Blockcopolymeren, die Herstellung der vernetzbaren Zusammensetzungen, deren Vulkanisation sowie die Verwendung der Vulkanisate.

Organopolysiloxan-Polyharnstoff-Blockcopolymere sind bekannt und werden durch Copolymerisation von mit Aminoalkylgruppen terminierten Siloxanen und Diisocyanaten hergestellt (*Polymer*, Bd. 25 (1984), S. 1800 f.).

Durch die Ausbildung von Wasserstoffbrucken zwischen den Harnstoffgruppen können diese Copolymere thermoplastische Elastomere sein. Somit sind derartige Copolymere oberhalb des Erweichungspunktes plastisch, wahrend sie darunter elastische Eigenschaften haben. Damit können sie beispielsweise als Schmelzkleber verwendet werden. Nachteilig für die Verwendung derartiger Copolymere als Schmelzkleber ist jedoch, dass durch Temperaturerhöhung über den Erweichungspunkt hinaus die Verklebung wieder reversibel ist. Zudem unterliegen Formkörper oder Verklebungen, die aus solchen Copolymeren hergestellt wurden, einem kalten Fluss, da sich Wasserstoffbrücken auch unterhalb des Erweichungspunktes ständig lösen und neu knüpfen können, so dass Verformungen und deshalb Versagen der gewünschten Funktion möglich sind. Damit ist der Einsatzbereich limitiert auf Anwendungen, bei denen keine erhöhten Temperaturen bzw. Kräfte auf das thermoplastische Elastomer einwirken.

Eine Losung des Problems besteht darin, die einzelnen Polymerketten zusätzlich mit kovalenten, also thermisch nicht reversiblen, Bindungen zu vernetzen. Werden die thermoplastischen Elastomere in der Herstellung durch Verwendung von beispielsweise trifunktionellen Bausteinen vernetzt so können die Verarbeitungseigenschaften (z.B. Schmelzeviskositat) negativ beeinflusst werden. Eine Vernetzung nach der Applikation ist deshalb sinnvoller.

In den Patentschriften EP 0 250 248 B1, EP 0 822 952 A1 und DE 101 13 980 A1 werden beispielsweise mit feuchtigkeitsvernetzbaren Silylendgruppen versehene Organopolysiloxan-Polyharnstoff-Blockcopolymere beschrieben. Dies ermoglicht eine Vernetzung nach der schmelzflussigen Applikation über diese Endgruppen. Die erreichbare Vernetzungsdichte ist allerdings besonders bei langkettigen Blockcopolymeren mit kleiner Endgruppenkonzentration gering, andererseits ist jedoch auch ein hoher Polymerisationsgrad der Blockcopolymere für die Ausbildung der thermoplastischen Eigenschaften notwendig.

Aufgabe der vorliegenden Erfindung war daher, Organopolysiloxan-Polyharnstoff-Blockcopolymere, die gute thermoplastische Verarbeitungseigenschaften aufweisen und deren Gehalt an durch Feuchtigkeit vernetzbaren Gruppen einstellbar und unabhangig von der Polymerkettenlange ist, zur Verfugung zu stellen. Durch die Variation des Gehalts an durch Feuchtigkeit vernetzbaren Gruppen unabhängig von der Polymerkettenlänge sollte die mechanische Festigkeit der aus solchen Copolymeren hergestellten Vulkanisate einstellbar sein, da diese auf der Dichte der zusatzlichen Vernetzungsstellen beruht. Zusatzlich soll die Anforderung an eine bessere Haftung auf silikatischen Oberflachen erfüllt werden.

Gegenstand der Erfindung sind daher Copolymere der allgemeinen Formel (I):

$$(A)_a(B)_b(C)_c \qquad (I)$$

worin

(A) die allgemeine Formel (II):

$$- [NH\text{-}Z\text{-}NH\text{-}CO\text{-}ND\text{-}Y\text{-}SiR_2\text{-}(O\text{-}SiR_2)_r\text{-}O\text{-}SiR_2\text{-}Y\text{-}ND\text{-}CO]\text{-} \qquad (II)$$

(B) die allgemeine Formel (III):

$$- [NH\text{-}Z\text{-}NH\text{-}CO\text{-}ND\text{-}Y\text{-}Si(OR^1)_o R_{2\text{-}o}\text{-}(O\text{-}SiR_2)_n\text{-}O\text{-}Si(OR^1)_o R_{2\text{-}o}\text{-}Y\text{-}ND\text{-}CO] \text{-} \qquad (III)$$

(C) die allgemeine Formel (IV):

$$-[NH\text{-}Z\text{-}NH\text{-}CO\text{-}E\text{-}X\text{-}E\text{-}CO]\text{-} \qquad (IV)$$

bedeuten, wobei

**X** einen gegebenenfalls durch Fluor, Chlor, $C_1$-$C_6$-Alkyl- oder $C_1$-$C_6$-Alkylester substituierten Alkylenrest mit 1 bis 700 Kohlenstoffatomen, in dem einander nicht benachbarte Methyleneinheiten durch Gruppen -O-, -COO-, -OCO-, oder -OCOO-, ersetzt sein können, oder Arylenrest mit 6 bis 22 Kohlenstoffatomen,

**Y** einen Alkylenrest mit 1 bis 30 Kohlenstoffatomen, in dem einander nicht benachbarte Methyleneinheiten durch Gruppen -O- ersetzt sein können, oder einen Arylenrest mit 6 bis 22 Kohlenstoffatomen,

**Z** einen zweiwertigen, gegebenenfalls durch Fluor oder Chlor substituierten Kohlenwasserstoffrest mit 1 bis 30 Kohlenstoffatomen,

**D** Wasserstoff, einen substituierten oder unsubstituierten Kohlenwasserstoffrest oder einen $R_2Si$-X-$NH_2$-Rest darstellt,

**E** ein Sauerstoffatom oder eine Aminogruppe -$NR^2$-,

**R** einen einwertigen, gegebenenfalls durch Fluor oder Chlor substituierten Kohlenwasserstoffrest mit 1 bis 20 Kohlenstoffatomen,

**$R^1$** eine hydrolysierbare Gruppe ausgewählt aus der Gruppe enthaltend Wasserstoff, einwertige, gegebenenfalls durch Fluor oder Chlor substituierten Kohlenwasserstoffreste mit 1 bis 20 Kohlenstoffatomen, -(C=O)-R und -N=CR$R^3$,

**$R^2$** Wasserstoff, einen Alkylrest mit 1 bis 10 Kohlenstoffatomen oder einen Arylrest mit 6 bis 22 Kohlenstoffatomen,

**$R^3$** einen einwertigen, gegebenenfalls durch Fluor oder Chlor substituierten Kohlenwasserstoffrest mit 1 bis 20 Kohlenstoffatomen,

**n** eine Zahl von 1 bis 4000,

**r** eine Zahl von 1 bis 4000,

**o** 1 oder 2,

**a** eine Zahl von mindestens 0,

**b** eine Zahl von größer 0 und

**c** eine Zahl von mindestens 0 bedeuten,

mit der Maßgabe, dass die einzelnen Blocke (A), (B) und (C) statistisch verteilt sein können.

Bevorzugt ist **c** = 0 und **a > 5*b**, besonders bevorzugt ist **c** = 0 und **a > 10*b**.

**Z** ist bevorzugt eine gesättigte Alkylengruppe mit bis zu 24 Kohlenstoffatomen.

**Y** ist bevorzugt eine gesättigte Alkylengruppe mit 1 bis 3 Kohlenstoffatomen, besonders bevorzugt mit 3 Kohlenstoffatomen.

**R** bedeutet bevorzugt Alkylgruppe, besonders bevorzugt eine Methylgruppe.

**D** bedeutet bevorzugt eine Alkylgruppe oder ein Wasserstoffatom, besonders bevorzugt ein Wasserstoffatom.

**X** bedeutet bevorzugt eine Polyethergruppe, besonders bevorzugt eine Polypropylenglykolgruppe.

**E** bedeutet bevorzugt Sauerstoff.

Die Gruppe **O$R^1$** bedeutet bevorzugt eine Alkoxygruppe, besonders bevorzugt eine Methoxy- oder Ethoxygruppe.

Der Indeces **r** und **n** bedeuten unabhängig von einander bevorzugt eine ganze Zahl von größer 0, besonders bevorzugt von großer 30.

Der Index **o** ist bevorzugt die Zahl 2.

Erfindungsgemäße Copolymere enthaltend die Komponente (C) ergeben ein harteres Material in Vergleich zu erfindungsgemäßen Copolymeren, die keine Komponente (C) enthalten, da in ihnen mehr Wasserstoffbrücken vorliegen. Überschreitet der Anteil an Komponente (C) einen kritischen Wert, so wird die Transparenz der erfindungsgemäßen Copolymere reduziert und die Copolymere werden trüb. Bevorzugt sind Polymere mit c gleich Null, da somit ausschließlich Siloxanketten vorliegen und dadurch die Polymere Vorteile, wie beispielsweise hohe Transparenz und UV-Stabilität bei gleichzeitig niedrigen Oberflachenenergien, aufweisen.

Vorwiegend durch die geeignete Wahl der Anzahl von Silanolgruppen im erfindungsgemäßen Copolymer wird eine bessere Haftung auf silikatischen Oberflachen erreicht.

Die erfindungsgemäßen Copolymere weisen gute mechanische Eigenschaften unabhängig von der Zugabe von Füllstoffen auf. Weiterhin zeichnen sich die erfindungsgemäßen Copolymere durch hervorragende physikalische Eigenschaften, wie sie vornehmlich von Polyorganosiloxanen bekannt sind, wie beispielsweise niedrige Glasübergangstemperaturen, Transparenz, gute Beständigkeit gegenüber UV-Licht, geringe Oberflächenenergien, niedrige Hydrophobizität, gute dielektrische Eigenschaften und hohe Permeabilität gegenüber Gasen. Weitere Vorteile der erfindungsgemäßen Copolymere sind die hohe thermische und oxidative Beständigkeit, gute Beständigkeiten gegenüber Schwellen und Zersetzung durch Kohlenwasserstoff haltigen Losemitteln. Durch die Verwendung von Kettenverlängern, wie beispielsweise organischen Diaminen oder Dihydroxyverbindungen, können die Eigenschaften, wie beispielsweise Schäl- und Ablösefestigkeit, Bedruckbarkeit, Zug- und Durchreißfestigkeit oder Wasserdampfdurchlässigkeit verbessert werden.

Ein weiterer Gegenstand der vorliegenden Erfindung ist ein Verfahren zur Herstellung der erfindungsgemäßen Copolymere gemäß der allgemeinen Formel (I) durch die Umsetzung von

(1) mindestens einem Polymer der allgemeinen Formel (V)

$$\text{H-ND-Y-Si(OR}^1)_oR_{2-o}\text{-(O-SiR}_2)_n\text{-O-Si(OR}^1)_oR_{2-o}\text{-Y-ND-H} \qquad \text{(V)}$$

(2) mindestens einem Diisocyanat der allgemeinen Formel (VI)

$$\text{OCN-Z-NCO} \qquad \text{(VI)}$$

oder blockierten Diisocyanaten oder Polyisocyanaten, wobei Z ein zweiwertiger Rest ist ausgewählt aus der Gruppe enthaltend Arylen-, Alkylen- und Alkylarylenreste,

(3) gegebenenfalls Polymeren der allgemeinen Formel (VII)

$$\text{H-ND-Y-SiR}_2\text{-(O-SiR}_2)_r\text{-O-SiR}_2\text{-Y-ND-H} \qquad \text{(VII) ,}$$

(4) gegebenenfalls Verbindungen der allgemeinen Formel (VIII)

$$\text{H-E-X-E-H} \qquad \text{(VIII),}$$

(5) gegebenenfalls Kettenverlängerern ausgewählt aus Gruppe enthaltend Diamine, Diole oder mit Isocyanatgruppen terminierte Dihydroxyverbindungen gemäß der allgemeinen Formel (VI) oder Mischungen davon und

(6) gegebenenfalls einem Katalysator, der die Addition der Isocyanatgruppe an die aktiven Gruppen der Polymere gemäß den allgemeinen Formeln V und VII sowie der Verbindung gemäß Formel VIII fordert,

gegebenenfalls in mindestens einem Lösemittel, wobei **X, Y, Z, D, R, R$^1$, R$^2$, R$^3$** und **o** die oben genannte Bedeutung aufweisen.

Die Herstellung der erfindungsgemäßen Copolymere erfolgt in Losung bevorzugt bei 0 bis 100°C. Die bevorzugte Herstellung der erfindungsgemäßen Copolymere in Substanz erfolgt hingegen vorzugsweise bei Temperaturen oberhalb des Erweichungspunkts des Copolymers gemäß der allgemeinen Formel (I).

Die Stöchiometrie der Reaktanden zur Herstellung der erfindungsgemäßen Copolymere wird vorzugsweise derart gewählt, dass das molare Verhältnis von Isocyanatgruppen zu mit dem Isocyanat reaktiven Gruppen im Bereich von 0,9:1 bis 1,3:1, besonders bevorzugt 0,95:1 bis 1,05:1 und insbesondere bevorzugt bei 1:1 liegt. Somit sind sowohl isocyanathaltige als auch isocyanatfreie Copolymere der allgemeinen Formel (I) erhaltlich.

Die Herstellung der erfindungsgemäßen Copolymere kann auch mittels Verfahren erfolgen, die dem Fachmann bekannt sind und beispielsweise zur Synthese von (Prä)polymeren für Polyurethane eingesetzt werden. Die Synthese kann in Lösung oder bevorzugt lösemittelfrei erfolgen.

Die Verfahren können diskontinuierlich oder bevorzugt kontinuierlich sein, also beispielsweise in Planetenmischern oder in Extrudern erfolgen.

Die unvernetzten Copolymere der Formel (I) können mit den üblichen Verarbeitungsmethoden für feuchtigkeitsvernetzbare Polymere bzw. thermoplastische Elastomere hergestellt und verarbeitet werden, beispielsweise mittels Extrusion, Spritzguss, Blasverformung, Vakuumtiefziehen. So sind die erfindungsgemäßen Copolymere beispielsweise als Schmelzkleber einsetzbar. Ebenso sind sie als Schmelze, wie beispielsweise im Spritzguss, zu verarbeiten. Eine Verarbeitung als Losung oder Emulsion bzw. Suspension ist ebenfalls möglich, beispielsweise zur Imprägnierung von Oberflächen.

Bevorzugte Anwendungen der erfindungsgemäßen Copolymere der allgemeinen Formel (I) sind Verwendungen als Bestandteil in Kleb- und Dichtstoffen, als Basisstoff für thermoplastische Elastomere wie beispielsweise Kabelumhüllungen, Schlauche, Dichtungen, Tastaturmatten, für Membranen, wie selektiv gasdurchlässige Membranen, als Zusatzstoffe in Polymerblends, oder für Beschichtungsanwendungen beispielsweise in Antihaftbeschichtungen, gewebevertraglichen Uberzugen, flammgehemmten Überzügen und als biokompatible Materialien. Weitere Anwendungsmöglichkeiten sind Dichtstoffe, Additive für die Polymerverarbeitung, anti-fouling Überzüge, Kosmetika, Korperpflegemittel, Lackadditive, Hilfsstoff in Waschmitteln und Textilbearbeitung, zum Modifizieren von Harzen oder zur Bitumenmodifizierung.

Der Einsatz der erfindungsgemäßen Copolymere ist in vielen Anwendungen denkbar, wie beispielsweise in Dichtmassen, Klebstoffen, als Material für Fasern, als Kunststoffadditiv beispielsweise als Schlagzahverbesserer oder Flammschutzmittel, als Material für Entschäumerformulierungen, als Hochleistungspolymer (Thermoplast, thermoplastisches Elastomer, Elastomer), als Verpackungsmaterial für elektronische Bauteile, in Isolations- oder Abschirmungsmaterialien, in Kabelummantelungen, in Antifoulingmaterialien, als Additiv für Putz-, Reinigungs- oder Pflegemittel, als Additiv für Korperpflegemittel, als Beschichtungsmaterial fur Holz, Papier und Pappe, als Formentrennmittel, als biokompatibles Material in medizinischen Anwendungen wie Kontaktlinsen, als Beschichtungsmaterial für Textilfasern oder textile Gewebe, als Beschichtungsmaterial für Naturstoffe wie z.B. Leder und Pelze, als Material für Membranen und als Material für photoaktive Systeme beispielsweise für lithographische Verfahren, optische Datensicherung oder optische Datenübertragung.

Weiterhin bevorzugt ist die Verwendung der erfindungsgemäßen Copolymere als Release-Beschichtung fur Klebebander und Etiketten, Faserbeschichtung für beispielsweise Textilien, Extrusionshilfsmittel für Thermoplastverarbeitung, medizinische Artikel, wie beispielsweise Katheter, Infusionsbeutel- oder - schlauche, Schmelzkleber, PSA-Beschichtungen, uberstreichbare und uberlackierbare Bauteile fur die Automobilindustrie, Additiv für die Polymermodifizierung, wie beispielsweise Weichmacher oder Schlagzahmodifier, Folie für laminiertes Sicherheitsglas oder Fugendichtmasse für die Bauindustrie.

Die erfindungsgemäßen Copolymere können überall dort eingesetzt werden, wo auch bisher Organopolysiloxan-Polyharnstoff-Blockcopolymere eingesetzt wurden.

Insbesondere eignen sich die erfindungsgemäßen Copolymere der allgemeinen Formel (I) zur Verwendung in vernetzbaren Zusammensetzungen. Bevorzugt sind hierbei bei Raumtemperatur vernetzbare Zusammensetzungen.

Ein weiterer Gegenstand der vorliegenden Erfindung sind vernetzbare Zusammensetzungen enthaltend ein erfindungsgemäße Copolymer gemäß der allgemeinen Formel (I).

Besonders bevorzugt sind vernetzbare Zusammensetzungen enthaltend

(a) das erfindungsgemäße Copolymer gemäß der allgemeinen Formel (I),
(b) mindestens einen Vernetzer auf Silanbasis,
(c) eine effektive Menge mindestens eines Katalysators,
(d) mindestens einen verstärkende oder nichtverstärkende Füllstoff oder eine Mischung von verstärkenden oder nichtverstärkenden Füllstoffen,
(e) gegebenenfalls Haftvermittler und
(f) gegebenenfalls weitere Hilfsstoffe ausgewählt aus der Gruppe enthaltend Weichmacher, Stabilisatoren, Antioxidantien, Flammschutzmittel, Lichtschutzmittel und Pigmente.

Bei diesen erfindungsgemaßen vernetzbaren Zusammensetzungen handelt es sich bevorzugt um Zweikomponentenmassen, bei denen eine erste Komponente A die Bestandteile (a), gegebenenfalls (d) und gegebenenfalls (f) enthält sowie eine zweite Komponente B die Bestandteile (b), gegebenenfalls (c), gegebenenfalls (e) und gegebenenfalls (f) enthält. Zur Bereitung der Komponenten A und B können die jeweils eingesetzten Bestandteile auf beliebige und bisher bekannte Weise miteinander vermischt werden. Dieses Vermischen erfolgt bevorzugt bei Raumtemperatur bzw. bei einer Temperatur, die sich beim Zusammengeben der Bestandteile bei Raumtemperatur ohne zusatzliche Heizung oder Kühlung einstellt, und dem Druck der umgebenden Atmosphäre, also etwa 900 bis 1100 hPa. Falls erwünscht, kann dieses Vermischen aber auch bei höheren oder niedrigen Drucken erfolgen, beispielsweise bei niedrigen Drücken zur Vermeidung von Gaseinschlüssen.

Die Herstellung der erfindungsgemaßen Massen und deren Lagerung erfolgen vorzugsweise unter im Wesentlichen wasserfreien Bedingungen, um ein vorzeitiges Reagieren der Massen zu vermeiden.

Als Füllstoffe (d) können alle Füllstoffe eingesetzt werden die auch bisher in vernetzbaren Massen eingesetzt worden sind. Beispiele für Füllstoffe sind verstärkende Füllstoffe, also Fullstoffe mit einer BET-Oberflache von mindestens 30 $m^2/g$, wie beispielsweise Ruße, pyrogen hergestellte Kieselsaure, gefallte Kieselsaure und Silicium-Aluminium-Mischoxide, wobei die genannten Füllstoffe hydrophobiert sein können, sowie nicht verstärkenden Füllstoffe, also Füllstoffe mit einer BET-Oberfläche von weniger als 30 $m^2/g$, wie beispielsweise Pulver aus Quarz, Cristobalit, Diatomeenerde, Calciumsilikat, Zirkoniumsilikat, Montmorillonite, wie Bentonite, Zeolithe einschließlich der Molekularsiebe, wie Natriumaluminiumsilikat, Metalloxide, wie Aluminium- oder Zinkoxid bzw. deren Mischoxide, Metallhydroxide, wie Aluminiumhydroxid, Bariumsulfat, Calciumcarbonat, Gips, Siliciumnitrid, Siliciumcarbid, Bornitrid, Glas-, Kohle- und Kunststoffpulver und Glas- und Kunststoffhohlkugeln.

Bevorzugt handelt es sich bei Füllstoff (d) um pyrogene Kieselsäuren oder Ruße oder deren Gemische, wobei Ruß mit einer BET-Oberfläche von mindestens 30 $m^2/g$ besonders bevorzugt ist.

Falls die erfindungsgemaßen Zusammensetzungen Füllstoffe (d) enthalten, handelt es sich um Mengen von vorzugsweise 1 bis 50 Gewichtsprozent, bevorzugt 2 bis 30 Gewichtprozent.

Gegebenenfalls können die erfindungsgemäßen vernetzbaren Zusammensetzungen zusätzlich weitere Organopolysiloxane enthalten. Bevorzugt enthalten dann die erfindungsgemaßen vernetzbaren Zusammensetzungen $\alpha,\omega$-Dihydroxypolydimethylsiloxane. Diese Bestandteile werden bevorzugt zur Einstellung der Verarbeitungseigenschaften, wie beispielsweise Viskosität oder Topfzeit, eingesetzt, wobei es sich bevorzugt um $\alpha,\omega$-Dihydroxypolydimethylsiloxane mit einer Viskosität von 100 bis 500.000 mPas handelt. Die $\alpha,\omega$-Dihydroxypolydimethylsiloxane werden dabei vorzugsweise in Mengen von 1 bis 20 Gewichtsteilen, besonders bevorzugt 2 bis 10 Gewichtsteilen, jeweils bezogen auf 100 Gewichtsteile Bestandteil (a)eingesetzt.

Als Vernetzer (b) können alle Vernetzer eingesetzt werden, die auch bisher in durch Kondensation vernetzbaren Massen eingesetzt worden sind. Beispiele für Vernetzer (b) sind Organyloxysilane sowie deren Teilhydrolysate, wie beispielsweise Tetraethoxysilan, Tetra-*iso*-propoxysilan, Tetra-n-propoxysilan, Methyltrimethoxysilan, Methyltriethoxysilan, Vinyltrimethoxysilan und Vinyltriethoxysilan sowie deren Teilhydrolysate.

Bevorzugt wird als Vernetzer (b) Tetraethoxysilan, Tetra-iso-propoxysilan und Tetra-n-propoxysilan eingesetzt, wobei Tetraethoxysilan und Tetra-n-propoxysilan besonders bevorzugt sind.

Die erfindungsgemäßen vernetzbaren Zusammensetzungen enthalten den Vernetzer (b) in Mengen von vorzugsweise 0,05 bis 10 Gewichtsteilen, bevorzugt 0,2 bis 5 Gewichtteilen, jeweils bezogen auf 100 Gewichtsteile Bestandteil (a).

Als Haftvermittler (e) können alle Haftvermittler eingesetzt werden die auch bisher in durch Kondensation vernetzbaren Massen eingesetzt worden sind. Beispiele für Haftvermittler (e) sind Silane mit hydrolysierbaren Gruppen und SiC-gebundenen Vinyl-, Acryloxy-, Methacryloxy-, Epoxy-, Säureanhydrid-, Säure-, Ester- oder Ethergruppen sowie deren Teil- und Mischhydrolysate.

Bevorzugt wird als Haftvermittler (e) 3-Aminopropyltriethoxysilan, 3-(2-aminoethyl)aminopropyltrimethoxysilan, 3-Aminopropyltrimethoxysilan, 3-(2-aminoethyl)aminopropyltriethoxysilan eingesetzt, wobei 3-Aminopropyltriethoxysilan besonders bevorzugt ist.

Falls die erfindungsgemäßen Massen Haftvermittler (e) enthalten, handelt es sich um Mengen von vorzugsweise 0,01 bis 5 Gewichtsteilen, bevorzugt 0,5 bis 4 Gewichtsteilen, jeweils bezogen auf 100 Gewichtsteile Bestandteil (a).

Als Katalysatoren (c) können alle dem Fachmann bekannten Kondensationskatalysatoren verwendet werden.

Beispiele für Kondensationskatalysatoren (c) sind Butyltitanate und organische Zinnverbindungen, wie Di-n-butylzinndilaurat und Di-n-butylzinndiacetat sowie dessen Umsetzungsprodukte mit den als Vernetzer bzw. Haftvermittler oben genannten Alkoxysilanen, Dialkylzinnoxidlosungen in den als Vernetzer bzw. Haftvermittler oben genannten Alkoxysilanen, wobei Di-n-butylzinndilaurat und Dibutylzinnoxid in Tetraethylsilikat bevorzugt und Di-n-butylzinndilaurat besonders bevorzugt ist.

Falls die erfindungsgemäßen vernetzbaren Zusammensetzungen Katalysator (c) enthalten, handelt es sich um Mengen von vorzugsweise 0,01 bis 3 Gewichtsteilen, bevorzugt 0,05 bis 2 Gewichtteilen, jeweils bezogen auf 100 Gewichtsteile Bestandteil (a).

Bevorzugt handelt es sich bei den gegebenenfalls eingesetzten weiteren Stoffen (f) um Antioxidantien und Lichtstabilisatoren.

Falls Bestandteil (f) eingesetzt wird, handelt es sich um Mengen von bevorzugt 0,01 bis 5 Gewichtsprozent, besonders bevorzugt 0,05 bis 4 Gewichtsprozent.

Bei den einzelnen Bestandteilen der erfindungsgemäßen vernetzbaren Zusammensetzungen kann es sich jeweils um eine Art eines solchen Bestandteils wie auch um ein Gemisch aus mindestens zwei verschiedenen Arten derartiger Bestandteile handeln.

Fur die Vernetzung der erfindungsgemaßen Zusammensetzungen reicht vorzugsweise der übliche Wassergehalt der Luft aus. Die Vernetzung der erfindungsgemaßen Zusammensetzungen erfolgt vorzugsweise bei Raumtemperatur. Sie kann, falls erwünscht, auch bei höheren oder niedrigeren Temperaturen als Raumtemperatur, wie beispielsweise bei -5 bis 15°C oder bei 30 bis 50°C beispielsweise auch mittels den normalen Wassergehalt der Luft übersteigenden Konzentrationen von Wasser durchgeführt werden. Vorzugsweise wird die Vernetzung bei einem Druck von 100 bis 1100 hPa, insbesondere beim Druck der umgebenden Atmosphäre, durchgeführt.

Die Herstellung der erfindungsgemäßen vernetzbaren Zusammensetzung enthaltend ein erfindungsgemäßes Copolymer gemäß der allgemeinen Formel (I) erfolgt mit Methoden, die dem Fachmann bekannt sind, wie beispielsweise mittels Extrudern, Knetern, Walzenstühlen, dynamischem oder statischen Mischern. Die Herstellung der erfindungsgemaßen Zusammensetzung kann kontinuierlich oder diskontinuierlich erfolgen. Bevorzugt erfolgt die Herstellung kontinuierlich.

Durch die erfindungsgemäße Zusammensetzung mittels Compoundierung werden Eigenschaften der erfindungsgemäßen Copolymeren gemäß der allgemeinen Formel (I), wie beispielsweise die Adhasion auf Kunststoffen, zusatzlich verbessert.

Ein weiterer Gegenstand der vorliegenden Erfindung ist ein Verfahren zur Herstellung der Vulkanisate ent-

haltend mindestens ein erfindungsgemäßes Copolymer der allgemeinen Formel (I) umfassen die Schritte

(I) Mischen von

a) mindestens einem Copolymer gemäß der allgemeinen Formel (I),
b) mindestens einem Vernetzer auf Silanbasis,
c) einer effektiven Menge mindestens eines Katalysators,
d) mindestens einem verstärkenden oder nichtverstärkenden Füllstoff oder einer Mischung von verstärkenden oder nichtverstärkenden Füllstoffen und
e) gegebenenfalls weiterer Hilfsstoffe ausgewählt aus der Gruppe enthaltend Weichmacher, Stabilisatoren, Haftvermittler, Antioxidantien, Flammschutzmittel, Lichtschutzmittel und Pigmente,

gegebenenfalls unter Zugabe von einem oder mehreren Losemitteln,
(II) Hydrolyse der hydrolysierbaren Gruppen -OR$^1$ unter Bildung von Silanolgruppen und
(III) Kondensation der entstandenen Silanolgruppen.

Vulkanisate der erfindungsgemäßen Copolymere sind durch Hydrolyse und anschließende Kondensation der entstandenen Silanolgruppen erhältlich. Die Hydrolyse kann durch Luftfeuchtigkeit oder durch Wasserdampf, Wasserbäder oder wasserhaltige Lösungen erfolgen im Kontakt mit dem erfindungsgemäßen Copolymer gemäß der allgemeinen Formel (I) oder mit Produkten, die mit dem erfindungsgemäßen Copolymer gemäß der allgemeinen Formel (I) behandelt wurden. Eine Vulkanisation ist ebenfalls durch Bestandteile von Zubereitungen, die das erfindungsgemäße Copolymer enthalten, möglich. Mögliche Bestandteile sind Salzhydrate oder miteinander unter Wasserabspaltung reagierende Stoffe. Anstelle des reinen Polymers können auch Zubereitungen, die das erfindungsgemäße Copolymer enthalten, zur Herstellung von Vulkanisaten verwendet werden.

Im Vergleich zu nicht vernetzten thermoplastischen Siloxan-Harnstoff-Copolymeren gemäß dem Stand der Technik weisen die Vulkanisate der erfindungsgemäßen Copolymere höhere Harten und einen großeren 100%-Spannungswert auf. Die zusätzliche Siloxanvernetzung erfolgt an Silylgruppen innerhalb der Polymerkette, was im Gegensatz zu vergleichbaren Blockcopolymeren mit terminalen, vernetzbaren Silylgruppen gemäß dem Stand der Technik eine deutlich höhere Reißdehnung der Vulkanisate bewirkt.

Durch die Vernetzung sind die Vulkanisate der erfindungsgemäßen Copolmyere nicht mehr plastisch, können also nicht mehr fließen und sind somit formbeständig. Insgesamt weisen die erfindungsgemäßen Vulkanisate also bessere mechanische Eigenschaften auf, so dass sie in vielfältigeren Einsatzgebieten verwendet werden können.

Die erfindungsgemäßen Vulkanisate werden vorzugsweise als Schmelzkleber, Klebstoff, PSA (Pressure Sensitve Adhesive), Dichtstoff, Beschichtung für beispielsweise Papier, Textil, Fasern oder silikatische Oberflächen, Imprägniermittel, Anstrich, Bestandteil in Verbundwerkstoffen, Additiv für Polymere, Formteil und Komponente für medizinische Zwecke sowie für den Einsatz im Automobilbau oder Laminatglas verwendet.

Alle vorstehenden Symbole der vorstehenden Formeln weisen ihre Bedeutungen jeweils unabhängig voneinander auf.

Die nachfolgenden Beispiele beschreiben bevorzugte Ausführungsformen der vorliegenden Erfindung ohne deren Umfang zu begrenzen. Die Bestimmung der mechanischen Eigenschaften erfolgt in Anlehnung an DIN 53504 und 53505. Die mit Aminopropyl terminierten Polydimethylsiloxane werden nach EP 1 201 699 hergestellt.

**Beispiel 1 (nicht erfindungsgemäß) :**

Zur Herstellung des mit Aminopropyldimethoxysilyl terminierten Polydimethylsiloxans werden 500 Gewichtsteile (GT) eines mit Silanolgruppen terminierten Polydimethylsiloxans mit einer Viskosität von 50 mPas mit 150 GT von Aminopropyltrimethoxysilan vermischt und nach 12 Stunden durch Kurzwegdestillation von flüchtigen Bestandteilen befreit.

**Beispiel 2:**

20 GT eines mit Aminopropyl terminierten Polydimethylsiloxans mit einem Molgewicht von 2890 g/mol und einer Viskosität von 50 mPas und 10 GT des mit Aminopropyldimethoxysilyl terminierten Polydimethylsiloxans aus Beispiel 1 mit einem Molgewicht von 2950 g/mol und einer Viskosität von 60 mPas werden in 40 GT Tetrahydrofuran (THF) gelöst und dazu unter Feuchtigkeitsausschluss 3 GT Hexamethylen-Diisocyanat in 10 GT THF langsam zugetropft. Die Temperatur steigt auf 32°C an und es wird anschließend für 2 Stunden auf 50°C erwärmt. Die Losung wird in eine ca. 2 mm tiefe PTFE-Form gegossen und das Losungsmittel unter Feuchtigkeitsausschluss verdampft. Es wird eine 1 mm dicke Folie erhalten, aus der Prüfkörper gestanzt werden. Mechanische Kennwerte für S2-Stäbe sind in Tabelle 1 wiedergegeben. Die Folie wird zusätzlich 1 Tag bei 23°C/50% relativer Luftfeuchtigkeit (rLF) gelagert, dann 1 Tag in Wasser gelagert, danach werden wiederum mechanische Kennwerte bestimmt.

**Beispiel 3:**

80 GT der nach Beispiel 2 hergestellten Lösung werden 0,3 GT eines Zinnkondensationskatalysators (Lösung von Dibutylzinnoxid in Tetraethylsilikat, ca. 14 Gew.-% Zinn) eingemischt bevor die Folien wie in Beispiel 2 gegossen werden. Die mechanischen Kennwerte vor und nach 1 Tag Lagerung bei 23°C/50% relativer Luftfeuchtigkeit sind in Tabelle 1 aufgeführt.

**Beispiel 4:**

In Zone 1 eines gegenläufigen 25-mm-Doppelschnecken-Extruders (Fa. Collin) mit einem Langen/Durchmesser-Verhältnis von 25:1 werden 0,77 GT Isophorondiisocyanat eingefördert. In die Zone 2 des gegenläufigen 25-mm-Doppelschnecken-Extruders wird ein Gemisch aus 9 GT eines mit Aminopropyl terminierten Polydimethylsiloxans (Molgewicht 2890 g/mol, Viskosität von 50 mPas) und 1 GT des mit Aminopropyldimethoxysilyl terminierten Polydimethylsiloxans gemäß Beispiel 1 (Molgewicht 2950 g/mol, Viskosität 60 mPas) eingefördert und in dem Extruder zu einem thermoplastischen Elastomer umgesetzt. Der aus dem Extruder ausgeförderte Strang wird an der Luft abgekühlt und anschließend granuliert. Die Temperaturen der Extruder-Heizzonen sind hier in Zone 1 25°C, Zone 2 90°C, Zone 3 175°C, Zone 4 175°C, Zone 5 140°C und Zone 6 (Düse) 100°C.

**Beispiel 5 (nicht erfindungsgemäß):**

30 Gewichtsteile (GT) eines mit Aminopropyl terminierten Polydimethylsiloxans mit einem Molgewicht von 2890 g/mol und einer Viskosität von 50 mPas werden in 40 GT Tetrahydrofuran (THF) gelost und dazu unter Feuchtigkeitsausschluss 3 GT Isophoron-Diisocyanat in 10 GT THF langsam zugetropft. Die Temperatur steigt auf 30°C an und es wird noch 2 Stunden auf 50°C erwärmt. Die Folien werden wie in Beispiel 2 beschrieben erhalten. Das Beispiel zeigt, dass ohne vernetzbare Gruppen auch keine weitere Vernetzung zu erhalten ist.

**Beispiel 6 (nicht erfindungsgemäß) :**

30 Gewichtsteile (GT) eines mit Aminopropyl terminierten Polydimethylsiloxans mit einem Molgewicht von 2890 g/mol und einer Viskosität von 50 mPas werden in 40 GT Tetrahydrofuran (THF) gelost und dazu unter Feuchtigkeitsausschluss 2,9 GT Hexamethylen-Diisocyanat und 0,1 GT Isocyanatopropyltrimethoxysilan in 10 GT THF langsam zugetropft. Die Temperatur steigt auf 35°C an und es wird noch 2 Stunden auf 50°C erwärmt. Die Folien werden wie in Beispiel 2 beschrieben erhalten. Das Beispiel zeigt, dass keine Anfangsfestigkeit zu erhalten ist und dass mit dem geringen Gehalt terminaler vernetzbarer Gruppen nur eine geringe weitere Vernetzung zu erhalten ist.

Tabelle 1:

| Beispiel | Lagerungsbedingungen | Mechanische Kennwerte | | | Spannungswert 100% |
|---|---|---|---|---|---|
| | | Härte [Shore A] | ZF [MPa] | RD [%] | [MPa] |
| 2 | 1 d 25°C/0% rLF | 35 | 0,56 | 663 | 0,47 |
| | 1 d 25°C/50% rLF 1 d Wasser | 43 | 1,16 | 716 | 0,82 |
| 3: | 1 d 25°C/50% rLF | 54 | 1,95 | 139 | 1,65 |
| 5: | 1 d 25°C/50% rLF 1 d Wasser | 31 | 0,71 | 204 | 0,64 |
| 6: | 1 d 25°C/0% rLF | 24 | 0,37 | 15 | 0 |
| | 1 d 25°C/50% rLF 1 d Wasser | 66 | 0,7 | 270 | 0,62 |

**Patentansprüche**

1. Copolymere der allgemeinen Formel (I):

$$(A)_a(B)_b(C)_c \qquad (I)$$

worin

    **(A)** die allgemeine Formel (II):

$$\text{-[NH-Z-NH-CO-ND-Y-SiR}_2\text{-(O-SiR}_2)_r\text{-O-SiR}_2\text{-Y-ND-CO]-} \qquad (II)$$

    **(B)** die allgemeine Formel (III):

$$\text{-[NH-Z-NH-CO-ND-Y-Si(OR}^1)_o\text{R}_{2\text{-}o}\text{-(O-SiR}_2)_n\text{-O-}$$

$$\text{-Si (OR}^1)_o\text{R}_{2\text{-}o}\text{-Y-ND-CO]-} \qquad (III)$$

    **(C)** die allgemeine Formel (IV):

$$\text{-[NH-Z-NH-CO-E-X-E-CO]-} \qquad (IV)$$

bedeuten, wobei

| | |
|---|---|
| **X** | einen gegebenenfalls durch Fluor, Chlor, $C_1$-$C_6$-Alkyl- oder $C_1$-$C_6$-Alkylester substituierten Alkylenrest mit 1 bis 700 Kohlenstoffatomen, in dem einander nicht benachbarte Methyleneinheiten durch Gruppen -O-, -COO-, -OCO-, oder -OCOO-, ersetzt sein können, oder Arylenrest mit 6 bis 22 Kohlenstoffatomen, |
| **Y** | einen Alkylen-Rest mit 1 bis 20 Kohlenstoffatomen, in dem einander nicht benachbarte Methyleneinheiten durch Gruppen -O- ersetzt sein können, oder einen Arylenrest mit 6 bis 22 Kohlenstoffatomen, |
| **Z** | einen zweiwertigen, gegebenenfalls durch Fluor oder Chlor substituierten Kohlenwasserstoffrest mit 1 bis 20 Kohlenstoffatomen, |
| **D** | Wasserstoff, einen substituierten oder unsubstituierten Kohlenwasserstoffrest oder einen $R_2Si$-X-$NH_2$-Rest darstellt, |
| **E** | ein Sauerstoffatom oder eine Aminogruppe -$NR^2$-, |
| **R** | einen einwertigen, gegebenenfalls durch Fluor oder Chlor substituierten Kohlenwasserstoffrest mit 1 bis 20 Kohlenstoffatomen, |
| **R**[1] | eine hydrolysierbare Gruppe ausgewählt aus der Gruppe enthaltend Wasserstoff, einwertige, gegebenenfalls durch Fluor oder Chlor substituierten Kohlenwasserstoffreste mit 1 bis 20 Kohlenstoffatomen, -(C=O)-R und -N=CRR$^3$, |
| **R**[2] | Wasserstoff, einen Alkylrest mit 1 bis 10 Kohlenstoffatomen oder einen Arylrest mit 6 bis 22 Kohlenstoffatomen, |
| **R**[3] | einen einwertigen, gegebenenfalls durch Fluor oder Chlor substituierten Kohlenwasserstoffrest mit 1 bis 20 Kohlenstoffatomen, |
| **n** | eine Zahl von 1 bis 4000, |
| **r** | eine Zahl von 1 bis 4000, |
| **o** | 1 oder 2, |
| **a** | eine Zahl von mindestens 0, |
| **b** | eine Zahl von größer 0 und |
| **c** | eine Zahl von mindestens 0 bedeuten, |

mit der Maßgabe, dass die einzelnen Blocke (A), (B) und (C) statistisch verteilt sein können.

2. Copolymer gemäß Anspruch 1, **dadurch gekennzeichnet, dass OR**[1] eine Alkoxygruppe ist.

**3.** Copolymer gemäß Anspruch 1 oder 2, **dadurch gekennzeichnet, dass c** den Wert Null aufweist.

**4.** Verfahren zur Herstellung der Copolymere gemäß der allgemeinen Formel (I) durch die Umsetzung von

(1) mindestens einem Polymer der allgemeinen Formel (V)

$$\text{H-ND-Y-Si(OR}^1\text{)}_o\text{R}_{2-o}\text{-(O-SiR}_2\text{)}_n\text{-O-Si(OR}^1\text{)}_o\text{R}_{2-o}\text{-Y-ND-H} \qquad \text{(V)}$$

(2) mindestens einem Diisocyanat der allgemeinen Formel VI)

$$\text{OCN-Z-NCO} \qquad \text{(VI)}$$

oder blockierten Diisocyanaten oder Polyisocyanaten, wobei Z ein zweiwertiger Rest ist ausgewählt aus der Gruppe enthaltend Arylen-, Alkylen- und Alkylarylenreste,

(3) gegebenenfalls Polymeren der allgemeinen Formeln (VII)

$$\text{H-ND-Y-SiR}_2\text{-(O-SiR}_2\text{)}_f\text{-O-SiR}_2\text{-Y-ND-H} \qquad \text{(VII),}$$

(4) gegebenenfalls Verbindungen der allgemeinen Formeln (VIII)

$$\text{H-E-X-E-H} \qquad \text{(VIII),}$$

(5) gegebenenfalls Kettenverlängerern ausgewählt aus Gruppe enthaltend Diamine, Diole oder mit Isocyanatgruppen terminierte Dihydroxyverbindungen gemäß der allgemeinen Formel (VI) oder Mischungen davon und

(6) gegebenenfalls einem Katalysator, der die Addition der Isocyanatgruppe an die aktiven Gruppen der Polymere gemäß den allgemeinen Formeln V und VII sowie der Verbindung gemäß Formel VIII fordert,

gegebenenfalls in einem oder mehreren Lösemittel, wobei

**X** einen gegebenenfalls durch Fluor, Chlor, $C_1$-$C_6$-Alkyl- oder $C_1$-$C_6$-Alkylester substituierten Alkylenrest mit 1 bis 700 Kohlenstoffatomen, in dem einander nicht benachbarte Methyleneinheiten durch Gruppen -O-, -COO-, -OCO-, oder -OCOO-, ersetzt sein können, oder Arylenrest mit 6 bis 22 Kohlenstoffatomen,

**Y** einen Alkylen-Rest mit 1 bis 30 Kohlenstoffatomen, in dem einander nicht benachbarte Methyleneinheiten durch Gruppen -O- ersetzt sein können, oder einen Arylenrest mit 6 bis 22 Kohlenstoffatomen,

**Z\*** einen zweiwertigen, gegebenenfalls durch Fluor oder Chlor substituierten Kohlenwasserstoffrest mit 1 bis 30 Kohlenstoffatomen,

**D** Wasserstoff, einen substituierten oder unsubstituierten Kohlenwasserstoffrest oder einen $R_2Si$-X-$NH_2$-Rest darstellt,

**E** ein Sauerstoffatom oder eine Aminogruppe -$NR^2$-,

**R** einen einwertigen, gegebenenfalls durch Fluor oder Chlor substituierten Kohlenwasserstoffrest mit 1 bis 20 Kohlenstoffatomen,

**R¹** eine hydrolysierbare Gruppe ausgewählt aus der Gruppe enthaltend Wasserstoff, einwertige, gegebenenfalls durch Fluor oder Chlor substituierten Kohlenwasserstoffreste mit 1 bis 20 Kohlenstoffatomen, -(C=O)-R und -N=$CRR^3$,

**R²** Wasserstoff, einen Alkylrest mit 1 bis 10 Kohlenstoffatomen oder einen Arylrest mit 6 bis 22 Kohlenstoffatomen,

**R³** einen einwertigen, gegebenenfalls durch Fluor oder Chlor substituierten Kohlenwasserstoffrest mit 1 bis 20 Kohlenstoffatomen, und

**o** 1 oder 2 bedeuten.

**5.** Verwendung der Copolymer nach mindestens einem der Ansprüche 1 bis 3 als Bestandteil in Kleb- und Dichtstoffen, als Basisstoff für thermoplastische Elastomere, Isolations- oder Abschirmungsmaterialien, Kabelumhullungen, Schlauche, Dichtungen, Dichtmassen, Schmelzkleber, Release-Beschichtung fur Klebebander und Etiketten, Kunststoffadditiv, Extrusionshilfsmittel für Thermoplastverarbeitung, Verpackungsmaterial für elektronische Bauteile, Material für Fasern, Tastaturmatten, Zusatzstoffe in Polymerblends, Additive für die Polymerverarbeitung, Anti-fouling Überzüge, Additiv für Putz-, Reinigungs-, Pflege- oder Körperpflegemittel, Lackaddititive, Hilfsstoff in Waschmitteln und Textilbearbeitung, photoaktive Systeme, optische Datensicherung oder optische Datenübertragung, medizinische Artikel, biokompatible Materialien sowie für gegebenenfalls selektiv gasdurchlässige Membranen, Beschichtungen, Antihaftbeschichtungen, gewebeverträglichen oder flammgehemmten Überzügen, Entschaumerformulierungen und zum Modifizieren von Harzen oder zur Bitumenmodifizierung.

6. Vernetzbare Zusammensetzungen enthaltend mindestens ein Copolymer gemäß der allgemeinen Formel (I) nach mindestens einem der Anspruche 1 bis 3.

7. Vernetzbare Zusammensetzungen enthaltend

   (a) das Copolymer gemäß der allgemeinen Formel (I) nach mindestens einem der Ansprüche 1 bis 3,
   (b) mindestens einen Vernetzer auf Silanbasis,
   (c) eine effektive Menge mindestens eines Katalysators,
   (d) mindestens einen verstärkende oder nichtverstärkende Füllstoff oder eine Mischung von verstärkenden oder nichtverstärkenden Füllstoffen,
   (e) gegebenenfalls Haftvermittler und
   (f) gegebenenfalls weitere Hilfsstoffe ausgewählt aus der Gruppe enthaltend Weichmacher, Stabilisatoren, Antioxidantien, Flammschutzmittel, Lichtschutzmittel und Pigmente.

8. Vulkanisate der Zusammensetzung gemaß einem der Anspruche 6 oder 7.

9. Vulkanisat nach Anspruch 8, **dadurch gekennzeichnet, dass OR$^1$** eine Alkoxygruppe ist.

10. Vulkanisat nach Anspruch 8 oder 9, **dadurch gekennzeichnet, dass c** den Wert Null aufweist.

11. Verfahren zur Herstellung der Vulkanisate nach mindestens einem der Ansprüche 8 bis 10 umfassen die Schritte

    (I) Mischen von

       a) mindestens einem Copolymer gemäß der allgemeinen Formel (I) nach mindestens einem der Anspruche 1 bis 3,
       b) mindestens einem Vernetzer auf Silanbasis,
       c) einer effektiven Menge mindestens eines Katalysators,
       d) mindestens einem verstärkenden oder nichtverstarkenden Füllstoff oder einer Mischung von verstärkenden oder nichtverstärkenden Füllstoffen,
       e) gegebenenfalls Haftvermittler und
       f) gegebenenfalls weiterer Hilfsstoffe ausgewählt aus der Gruppe enthaltend Weichmacher, Stabilisatoren, Antioxidantien, Flammschutzmittel, Lichtschutzmittel und Pigmente,

    gegebenenfalls unter Zugabe von einem oder mehreren Lösemitteln,
    (II) Hydrolyse der hydrolysierbaren Gruppen -OR$^1$ unter Bildung von Silanolgruppen und
    (III) Kondensation der entstandenen Silanolgruppen.

12. Verwendung der Vulkanisate nach mindestens einem der Ansprüche 8 bis 10 als Schmelzkleber, Klebstoff, PSA, Dichtstoff, Beschichtung für beispielsweise Papier, Textil, Fasern oder silikatische Oberflächen, Imprägniermittel, Anstrich, Bestandteil in Verbundwerkstoffen, Additiv für Polymere, Formteil und Komponente für medizinische Zwecke sowie für den Einsatz im Automobilbau oder Laminatglas.

**Claims**

1. Copolymers of the general formula (I):

$$(A)_a(B)_b(C)_c \qquad (I)$$

in which

**(A)** is the general formula (II):

$$-[NH-Z-NH-CO-ND-Y-SiR_2-(O-SiR_2)_r-O-SiR_2-Y-ND-CO]- \qquad (II)$$

**(B)** is the general formula (III):

$$-[NH-Z-NH-CO-ND-Y-Si(OR^1)_oR_{2-o}-(O-SiR_2)_n-O--Si(OR^1)_oR_{2-o}-Y-ND-CO]- \qquad (III)$$

(C) is the general formula (IV):

$$-[NH-Z-NH-CO-E-X-E-CO]- \qquad (IV)$$

where

**X** is an alkylene radical having 1 to 700 carbon atoms which is optionally substituted by fluorine, chlorine, $C_1$-$C_6$-alkyl or $C_1$-$C_6$-alkyl ester and in which nonadjacent methylene units may have been replaced by groups -O-, -COO-, -OCO-, or -OCOO-, or is an arylene radical having 6 to 22 carbon atoms,

**Y** is an alkylene radical having 1 to 20 carbon atoms in which nonadjacent methylene units may have been replaced by groups -O-, or is an arylene radical having 6 to 22 carbon atoms,

**Z** is a divalent hydrocarbon radical having 1 to 20 carbon atoms which is optionally substituted by fluorine or chlorine,

**D** is hydrogen, a substituted or unsubstituted hydrocarbon radical or a radical $R_2Si$-X-$NH_2$,

**E** is an oxygen atom or an amino group -$NR^2$-,

**R** is a monovalent hydrocarbon radical having 1 to 20 carbon atoms which is optionally substituted by fluorine or chlorine,

**R$^1$** is a hydrolysable group selected from the group consisting of hydrogen, monovalent hydrocarbon radicals having 1 to 20 carbon atoms and optionally substituted by fluorine or chlorine, -(C=O)-R and -N=CRR$^3$,

**R$^2$** is hydrogen, an alkyl radical having 1 to 10 carbon atoms or an aryl radical having 6 to 22 carbon atoms,

**R$^3$** is a monovalent hydrocarbon radical having 1 to 20 carbon atoms which is optionally substituted by fluorine or chlorine,

**n** is a number from 1 to 4000,

**r** is a number from 1 to 4000,

**o** is 1 or 2,

**a** is at least 0,

**b** is greater than 0, and

**c** is at least 0,

with the proviso that the individual blocks **(A), (B)**, and **(C)** can be randomly distributed.

2. Copolymer according to Claim 1, **characterized in that OR$^1$** is an alkoxy group.

3. Copolymer according to Claim 1 or 2, **characterized in that c** has the value zero.

4. Process for preparing the copolymers of the general formula (I) by reacting

(1) at least one polymer of the general formula (V)

$$H-ND-Y-Si(OR^1)_oR_{2-o}-(O-SiR_2)_n-O-Si(OR^1)_oR_{2-o}-Y-ND-H \qquad (V)$$

(2) at least one diisocyanate of the general formula (VI)

$$OCN-Z-NCO \qquad (VI)$$

or blocked diisocyanates or polyisocyanates, Z being a divalent radical selected from the group consisting of arylene, alkylene, and alkylarylene radicals,

(3) optionally polymers of the general formula (VII)

$$H-ND-Y-SiR_2-(O-SiR_2)_r-O-SiR_2-Y-ND-H \qquad (VII) ,$$

(4) optionally compounds of the general formula (VIII)

$$H-E-X-E-H \qquad (VIII),$$

(5) optionally chain extenders selected from the group consisting of diamines, diols, and isocyanato-terminated dihydroxy compounds of the general formula (VI), or mixtures thereof, and

(6) optionally a catalyst which promotes the addition of the isocyanate group to the active groups of the polymers of the general formulae V and VII and also of the compound of formula VIII,

optionally in one or more solvents, in which

- **X** is an alkylene radical having 1 to 700 carbon atoms which is optionally substituted by fluorine, chlorine, $C_1-C_6$-alkyl or $C_1-C_6$-alkyl ester and in which nonadjacent methylene units may have been replaced by groups having -O-, -COO-, -OCO-, or -OCOO-, or is an arylene radical having 6 to 22 carbon atoms,
- **Y** is an alkylene radical having 1 to 30 carbon atoms in which nonadjacent methylene units may have been replaced by groups -O-, or is an arylene radical having 6 to 22 carbon atoms,
- **Z** is a divalent hydrocarbon radical having 1 to 30 carbon atoms which is optionally substituted by fluorine or chlorine,
- **D** is hydrogen, a substituted or unsubstituted hydrocarbon radical or a radical $R_2S_1-X-NH_2$,
- **E** is an oxygen atom or an amino group $-NR^2-$,
- **R** is a monovalent hydrocarbon radical having 1 to 20 carbon atoms which is optionally substituted by fluorine or chlorine,
- **R¹** is a hydrolysable group selected from the group consisting of hydrogen, monovalent hydrocarbon radicals having 1 to 20 carbon atoms and optionally substituted by fluorine or chlorine, -(C=O)-R and $-N=CRR^3$,
- **R²** is hydrogen, an alkyl radical having 1 to 10 carbon atoms or an aryl radical having 6 to 22 carbon atoms,
- **R³** is a monovalent hydrocarbon radical having 1 to 20 carbon atoms which is optionally substituted by fluorine or chlorine, and
- **o** is 1 or 2.

5. Use of the copolymer according to at least one of claims 1 to 3 as a constituent in adhesives and sealants, as a base material for thermoplastic elastomers, insulation materials or shielding materials, cable sheathing, hoses, seals, sealants, hot-melt adhesives, release coating for adhesive tapes and labels, plastics additive, extrusion aid for thermoplastics processing, packaging material for electronic components, material for fibres, keyboard mats, additives in polymer blends, additives for polymer processing, antifouling coatings, an additive for scouring, cleaning, polishing or bodycare products, coatings additives, an auxiliary in laundry detergents and textile processing, photoactive systems, optical data securement or optical data transfer, medical devices, biocompatible materials, and also for membranes, including selectively gas-permeable membranes, coatings, including antistick coatings, tissue-compatible or flame-retarded coatings, defoamer formulations, and for modifying resins or for bitumen modification.

6. Crosslinkable compositions comprising at least one copolymer of the general formula (I) according to at least one of Claims 1 to 3.

**7.** Crosslinkable compositions comprising

(a) the copolymer of the general formula (I) according to at least one of Claims 1 to 3,
(b) at least one silane-based crosslinker,
(c) an effective amount of at least one catalyst,
(d) at least one reinforcing or nonreinforcing filler or a mixture of reinforcing or nonreinforcing fillers,
(e) if desired, adhesion promoters, and
(f) if desired, further auxiliaries selected from the group consisting of plasticizers, stabilizers, antioxidants, flame retardants, photostabilizers, and pigments.

**8.** Vulcanizates of the composition according to either of Claims 6 and 7.

**9.** Vulcanizate according to Claim 8, **characterized in that** $OR^1$ is an alkoxy group.

**10.** Vulcanizate according to Claim 8 or 9, **characterized in that** c has the value zero.

**11.** Process for preparing the vulcanizates according to at least one of Claims 8 to 10, which comprises the steps of

(I) mixing

a) at least one copolymer of the general formula (I) according to at leaset one of claims 1 to 3,
b) at least one silane-based crosslinker,
c) an effective amount of at least one catalyst,
d) at least one reinforcing or nonreinforcing filler or a mixture of reinforcing or nonreinforcing fillers,
e) if desired, adhesion promoters, and
f) if desired, further auxiliaries selected from the group consisting of plasticizers, stabilizers, antioxidants, flame retardants, photostabilizers, and pigments,

with the addition if desired of one or more solvents,
(II) hydrolysing the hydrolysable groups -$OR^1$ to form silanol groups, and
(III) condensing the silanol groups formed.

**12.** Use of the vulcanizates according to at least one of Claims 8 to 10 as an adhesive, including a hot-melt adhesive or PSA, sealant, coating for paper, textile, fibres or silicatic surfaces, for example, impregnant, paint, constituent in composites, additive for polymers, moulding and component for medical purposes, and also for use in automobile construction or laminated glass.

**Revendications**

**1.** Copolymères de formule générale (I)

$$(A)_a(B)_b(C)_c \qquad (I)$$

dans laquelle

(A) signifie la formule générale (II):

$$-[NH-Z-NH-CO-ND-Y-SiR_2-(O-SiR_2)_r-O-SiR_2-Y-ND-CO]- \qquad (II)$$

(B) signifie la formule générale (III):

$$-[NH-Z-NH-CO-ND-Y-S_1(OR^1)_oR_{2-o}-(O-SiR_2)_n-O-Si(OR^1)_oR_{2-o}-Y-ND-CO]- \qquad (III)$$

(C) signifie la formule générale (IV):

$$\text{-[NH-Z-NH-CO-E-X-E-CO]-} \qquad \text{(IV)}$$

où

X signifie un radical alkylène, le cas échéant substitué par fluor, chlore, alkyle en $C_1$ à $C_6$ ou ester d'alkyle en $C_1$ à $C_6$, comprenant 1 à 700 atomes de carbone, dans lequel des unités méthylène non adjacentes peuvent être remplacées par des groupements -O-, -COO-, -OCO- ou -OCOO-, ou un radical arylène comprenant 6 à 22 atomes de carbone,

Y signifie un radical alkylène comprenant 1 à 20 atomes de carbone, dans lequel des unités méthylène non adjacentes peuvent être remplacées par des groupements -O- ou un radical arylène comprenant 6 à 22 atomes de carbone,

Z signifie un radical hydrocarboné divalent, le cas échéant substitué par fluor ou chlore, comprenant 1 à 20 atomes de carbone,

D signifie hydrogène, un radical hydrocarboné substitué ou non substitué ou un radical $R_2Si\text{-}X\text{-}NH_2$,

E signifie un atome d'oxygène ou un groupement amino $\text{-}NR^2\text{-}$,

R signifie un radical hydrocarboné monovalent, le cas échéant substitué par fluor ou chlore, comprenant 1 à 20 atomes de carbone,

$R^1$ signifie un groupement hydrolysable choisi dans le groupe contenant hydrogène, les radicaux hydrocarbonés monovalents, le cas échéant substitués par fluor ou chlore, comprenant 1 à 20 atomes de carbone, $\text{-(C=O)-R}$ et $\text{-N=CRR}^3$,

$R^2$ signifie hydrogène, un radical alkyle comprenant 1 à 10 atomes de carbone ou un radical aryle comprenant 6 à 22 atomes de carbone,

$R^3$ signifie un radical hydrocarboné monovalent, le cas échéant substitué par fluor ou chlore, comprenant 1 à 20 atomes de carbone,

n signifie un nombre de 1 à 4000,

r signifie un nombre de 1 à 4000,

o signifie 1 ou 2,

a signifie un nombre d'au moins 0,

b signifie un nombre supérieur à 0 et

c signifie un nombre d'au moins 0,

à condition que les différents blocs (A), (B) et

(C) puissent être répartis statistiquement.

2. Copolymère selon la revendication 1, **caractérisé en ce que** $OR^1$ représente un groupement alcoxy.

3. Copolymère selon la revendication 1 ou 2, **caractérisé en ce que** c représente la valeur zéro.

4. Procédé pour la préparation des copolymères selon la formule générale (I) par la transformation

(1) d'au moins un polymère de formule générale (V)

$$\text{H-ND-Y-Si }(OR^1)_o R_{2\text{-}o}\text{- }(O\text{-}SiR_2)_n\text{-}O\text{-}Si }(OR^1)_o R_{2\text{-}o}\text{-Y-ND-H} \qquad \text{(V)}$$

(2) d'au moins un diisocyanate de formule générale (VI)

$$\text{OCN-Z-NCO} \qquad \text{(VI)}$$

ou de diisocyanates ou de polyisocyanates bloqués, Z étant un radical divalent choisi dans le groupe contenant les radicaux arylène, alkylène et alkylarylène,

(3) le cas échéant de polymères de formule générale (VII)

$$\text{H-ND-Y-SiR}_2\text{-(O-SiR}_2\text{)}_r\text{-O-SiR}_2\text{-Y-ND-H} \qquad\qquad \text{(VII)}$$

(4) le cas échéant de composés de formule générale (VIII)

$$\text{H-E-X-E-H} \qquad\qquad \text{(VIII)},$$

(5) le cas échéant d'agents d'allongement de chaîne choisis dans le groupe contenant les diamines, les diols ou les composés dihydroxy terminés par des groupements isocyanate selon la formule générale (VI) ou des mélanges de ceux-ci et

(6) le cas échéant d'un catalyseur, qui favorise l'addition du groupement isocyanate sur les groupements actifs des polymères selon les formules générales V et VII ainsi que du composé selon la formule VIII,

le cas échéant dans un ou plusieurs solvants,
où

**X** signifie un radical alkylène, le cas échéant substitué par fluor, chlore, alkyle en $C_1$ à $C_6$ ou ester d'alkyle en $C_1$ à $C_6$, comprenant 1 à 700 atomes de carbone, dans lequel des unités méthylène non adjacentes peuvent être remplacées par des groupements -O-, -COO-, -OCO- ou -OCOO-, ou un radical arylène comprenant 6 à 22 atomes de carbone,

Y signifie un radical alkylène comprenant 1 à 30 atomes de carbone, dans lequel des unités méthylène non adjacentes peuvent être remplacées par des groupements -O- ou un radical arylène comprenant 6 à 22 atomes de carbone,

Z signifie un radical hydrocarboné divalent, le cas échéant substitué par fluor ou chlore, comprenant 1 à 30 atomes de carbone,

D signifie hydrogène, un radical hydrocarboné substitué ou non substitué ou un radical $R_2\text{Si-X-NH}_2$,

E signifie un atome d'oxygène ou un groupement amino $-NR^2-$,

R signifie un radical hydrocarboné monovalent, le cas échéant substitué par fluor ou chlore, comprenant 1 à 20 atomes de carbone,

$R^1$ signifie un groupement hydrolysable choisi dans le groupe contenant hydrogène, les radicaux hydrocarbonés monovalents, le cas échéant substitués par fluor ou chlore, comprenant 1 à 20 atomes de carbone, -(C=O)-R et $-N=CRR^3$,

$R^2$ signifie hydrogène, un radical alkyle comprenant 1 à 10 atomes de carbone ou un radical aryle comprenant 6 à 22 atomes de carbone,

$R^3$ signifie un radical hydrocarboné monovalent, le cas échéant substitué par fluor ou chlore, comprenant 1 à 20 atomes de carbone, et

o signifie 1 ou 2.

5. Utilisation des copolymères selon au moins l'une quelconque des revendications 1 à 3 comme constituant dans des masses adhésives et d'étanchéité, comme substance de base pour les élastomères thermoplastiques, les matériaux d'isolation ou de protection, les gaines de câble, les flexibles, les joints, les masses d'étanchéité, les adhésifs en masse fondue, un revêtement anti-adhésif pour bandes adhésives et étiquettes, un additif pour matériaux synthétiques, un adjuvant d'extrusion pour la transformation des thermoplastiques, un matériau d'emballage pour pièces électroniques, un matériau pour fibres, les tapis de clavier, les additifs dans les mélanges de polymères, les additifs pour la transformation de polymères, les revêtements anti-salissure, un additif pour les produits de polissage, de nettoyage, d'entretien ou de soins corporels, les additifs de laque, les adjuvants dans les agents de lavage et le traitement des textiles, les systèmes photoactifs, la sécurité ou le transfert des données optiques, les objets médicaux, les matériaux biocompatibles ainsi que pour les membranes le cas échéant sélectivement perméables au gaz, les revêtements, les revêtements anti-adhésifs, les revêtements compatibles aux tissus ou ignifuges, les formulations d'anti-mousses et pour la modification de résines ou de bitume.

6. Compositions réticulables contenant au moins un copolymère selon la formule générale (I) selon au moins l'une quelconque des revendications 1 à 3.

7. Compositions réticulables contenant

(a) le copolymère selon la formule générale (I) selon au moins l'une quelconque des revendications 1 à 3,

(b) au moins un réticulant à base de silane,

(c) une quantité efficace d'au moins un catalyseur

(d) au moins une charge renforçante ou non renforçante ou un mélange de charges renforçantes ou non renforçantes,

(e) le cas échéant un promoteur d'adhérence et

(f) le cas échéant d'autres adjuvants choisis dans le groupe contenant les plastifiants, les stabilisateurs, les antioxydants, les agents retardateurs de flammes, les agents de protection contre la lumière et les pigments.

**8.** Produits de vulcanisation présentant la composition selon l'une quelconque des revendications 6 ou 7.

**9.** Produit de vulcanisation selon la revendication 8, **caractérisé en ce que** $OR^1$ représente un groupement alcoxy.

**10.** Produit de vulcanisation selon la revendication 8 ou 9, **caractérisé en ce que** c vaut zéro.

**11.** Procédé pour la préparation des produits de vulcanisation selon au moins l'une quelconque des revendications 8 à 10, comprenant les étapes

(I) de mélange

a) d'au moins un copolymère selon la formule générale (I) selon au moins l'une quelconque des revendications 1 à 3,

b) d'au moins un réticulant à base de silane,

c) d'une quantité efficace d'au moins un catalyseur,

d) d'au moins une charge renforçante ou non renforçante ou d'un mélange de charges renforçantes ou non renforçantes,

e) le cas échéant d'un promoteur d'adhérence et

f) le cas échéant d'autres adjuvants choisis dans le groupe contenant les plastifiants, les stabilisateurs, les antioxydants, les agents retardateurs de flamme, les agents de protection contre la lumière et les pigments le cas échéant avec addition d'un ou de plusieurs solvants,

(II) d'hydrolyse des groupements hydrolysables $-OR^1$ avec formation de groupements silanol et

(III) de condensation des groupements silanol formés.

**12.** Utilisation des produits de vulcanisation selon au moins l'une quelconque des revendications 8 à 10 comme adhésifs en masse fondue, adhésifs, PSA, matériau d'étanchéité, revêtement, par exemple pour le papier, le textile, les fibres ou les surfaces silicatées, comme agent d'imprégnation, enduit, constituant dans les matériaux composites, additif pour polymères, pièce façonnée et composant à des fins médicales ainsi que pour l'utilisation dans la construction automobile ou le verre stratifié.